**Europäisches Patentamt**

**European Patent Office**

**Office européen des brevets**

(19)

(11) Numéro de publication : **0 322 318 B1**

(12)

# FASCICULE DE BREVET EUROPEEN

(45) Date de publication du fascicule du brevet :
**11.03.92 Bulletin 92/11**

(51) Int. Cl.⁵ : **H02K 26/00, H01F 7/14, H01F 7/16**

(21) Numéro de dépôt : **88403284.8**

(22) Date de dépôt : **22.12.88**

(54) **Moteur électrique avec butée à verrouillage magnétique et volet thermique pour véhicule spatial commandé par un tel moteur.**

(30) Priorité : **23.12.87 FR 8718074**

(43) Date de publication de la demande :
**28.06.89 Bulletin 89/26**

(45) Mention de la délivrance du brevet :
**11.03.92 Bulletin 92/11**

(84) Etats contractants désignés :
**DE FR GB IT**

(56) Documents cités :
**FR-A- 2 058 477**
**US-A- 3 634 857**
**US-A- 3 970 980**
**US-A- 4 059 775**
**US-A- 4 227 164**
**US-A- 4 577 832**
**US-A- 4 642 539**

(73) Titulaire : **AEROSPATIALE Société Nationale Industrielle**
**37, Boulevard de Montmorency**
**F-75781 Paris Cédex 16 (FR)**

(72) Inventeur : **Vaillant de Guelis, Hubert**
**16, Allée Edith Piaf**
**F-78410 Aubergenville (FR)**
Inventeur : **Joly, Jean-Louis**
**4 rue du Pressoir**
**F-78130 Bazemont (FR)**

(74) Mandataire : **Rinuy, Santarelli**
**14, avenue de la Grande Armée**
**F-75017 Paris (FR)**

**Description**

On sait qu'un satellite sur orbite, selon qu'il est en plein soleil ou en zone d'ombre, est soumis à des températures comprises approximativement entre + 150°C et - 180° C. On comprendra, de ce fait, la nécessité de protéger thermiquement les matériels embarqués qui ne peuvent accepter de telles différences des températures.

Cette protection thermique peut se faire de différentes façons, parmi lesquelles on peut citer deux types de systèmes, à savoir :
– le système dit passif, où l'on emploie des peintures ou des isolants, et réalisant un super-isolateur ;
– le système dit actif où les échanges de calories se font par l'intermédiaire d'un fluide circulant dans des radiateurs.

A ces radiateurs sont associés des volets thermiques qui masquent ou démasquent les radiateurs en modulant ainsi leur rayonnement vers l'extérieur du satellite.

C'est ainsi qu'on peut utiliser un volet thermique dit en croix de Malte dont il affecte la forme et dont la rotation de 0° à 45° et de 45° à 0° par rapport à une référence fixe, permet de masquer ou de démasquer des radiateurs et de moduler ainsi leur rayonnement.

Antérieurement, la rotation du volet thermique était assurée par un bilame en forme de spirale, des butées périphériques assuraient le blocage du volet en position ouverte ou fermée.

Cette solution qui certes a l'avantage d'être simple et de ne pas consommer d'énergie, présente l'inconvénient majeur de ne pas permettre une régulation précise quand elle existe, du fait que les roulements utilisés pour la rotation ont souvent des points durs, surtout après avoir subi les vibrations de lancement du vecteur assurant la mis sur orbite du satellite.

Compte tenu de ces insuffisances, un nouveau dispositif, basé sur une rotation en "tout ou rien" par l'intermédiaire d'un moteur couple sans balai, a été mis au point.

Le problème qui se posait était de trouver un système permettant d'amortir les chocs au moment des fins d'ouverture ou de fermeture et de garantir cette position ouverte ou fermée sans consommation d'énergie.

Conformément à l'invention, l'amortissement des mouvements est obtenu par des butées élastiques prises dans un matériau amagnétique, le couple moteur étant maintenu jusqu'à l'arrêt complet du moteur, tandis que le verrouillage sans dépense d'énergie est assuré en dérivant une partie du champ magnétique du rotor vers une dent magnétique judicieusement disposée sur le stator.

L'avantage d'un tel système est que plus le rotor s'éloigne de cette dent et moins l'effort de verrouillage est important, en devenant très vite nul puisque l'évolution de l'effort est inversement proportionnel au carré de l'entrefer.

En d'autres termes, la présente invention concerne donc un dispositif de butée à verrouillage magnétique qui, associé à un moteur couple, permet de faire fonctionner un volet thermique dans des conditions optimales.

D'une façon plus générale, la présente invention concerne un moteur électrique comportant des butées à verrouillage magnétique permettant une grande précision de butée en position et le maintien de cette position sans dépense d'énergie.

C'est la raison pour laquelle, en particulier, le dispositif de butée à verrouillage magnétique conforme à l'invention s'applique d'une façon particulièrement avantageuse aux moteurs couples à courant continu sans balai.

Dans ce cas d'application le moteur est d'un type comprenant : un élément statorique en matériau magnétique entouré, sur une partie de sa longueur, d'au moins une bobine et un élément mobile portant au moins un aimant permanent générant un flux magnétique qui se referme dans ledit élément statorique.

L'invention propose ainsi un moteur électrique comportant :
– un élément statorique en matériau magnétique,
– un élément mobile en matériau magnétique portant au moins un aimant permanent et présentant deux extrémités adaptées à longer des tronçons de l'élément statorique en définissant avec ces tronçons deux entrefers constants grâce auxquels le flux magnétique de l'aimant permanent se referme dans ledit élément statorique entre ces tronçons,
– au moins une bobine enroulée autour d'au moins l'un de ces tronçons,
– au moins une paire de butées délimitant, le long desdits tronçons de l'élément statorique, un débattement donné pour lesdites extrémités de l'élément mobile, entre deux configurations de butée, l'une de ces extrémités étant en toute position de l'élément mobile en regard de ladite bobine, chacune de ces butées étant munie d'une portion en matériau magnétique liée à l'élément statorique et déterminant, lorsque l'une de ces extrémités est en appui contre cette butée, un entrefer (E) au travers duquel une partie du flux magnétique de l'aimant passe dans ladite portion en matériau magnétique, l'élément mobile venant en l'une ou l'autre desdites configurations de butée en fonction du sens du courant continu appliqué à la bobine et y restant magnétiquement verrouillé grâce à ladite portion magnétique des butées.

On appréciera que l'invention, grâce au découplage magnétique des bobines et des butées et donc grâce au verrouillage "passif" en butée qu'elle enseigne, permettant un bon contrôle de la cinétique de l'élément mobile, se distingue de dispositifs connus, notamment d'après les documents EP-A-0 188 921, US-A-4.577.832, US-A-3.634.857 et FR-A-2 058 477 où le mouvement de l'élément mobile résulte exclusivement de l'attraction-repulsion générées du fait des bobines par les butées, ce qui produit immanquablement des chocs en fin de course (verrouillage magnétique "actif" en butée). D'autres systèmes connus sont décrits dans les fascicules de brevets US-A-4227164 et US-A- 4642539.

Selon des dispositions préférées, éventuellement combinées :
– les butées sont en un matériau élastique amagnétique et sont chacune distinctes de la portion magnétique interposée entre cette butée et l'élément mobile,
– ladite paire de butées est portée par un même corps de butée, les configurations de butée correspondant soit à l'appui de l'une des extrémités contre l'une des butées, soit à l'appui de l'autre des extrémités contre l'autre des butées,
– ladit paire de butées est portée par deux corps de butée distincts et encadre avec ledit débattement l'une de ces extrémités de l'élément mobile,
– chacune des extrémités de l'élément mobile est formée par un aimant permanent et une bobine est enroulée sur chacun des deux tronçons statoriques.

L'invention propose également un volet thermique pour véhicule spatial commandé par un tel moteur.

D'autres caractéristiques, avantages et particularités de l'invention ressortiront de la description qui en est donnée ci-après en référence aux dessins annexés représentant, schématiquement et à titre d'exemples, préférentiels, deux formes de réalisation possibles de ladite invention.

Sur ces dessins :
– la figure 1 est une vue de dessus avec coupe partielle d'un moteur couple à courant continu sans balai muni d'un dispositif de butée à verrouillage magnétique conforme à l'invention;
– la figure 2 en est une vue en coupe transversale faite suivant la ligne II-II de la figure 1;
– la figure 3 est une vue de détail représentant, en plan, l'une des butées de l'ensemble de la figure 1;
– les figures 4 et 5 en sont des coupes transversales faites respectivement suivant les lignes IV-IV et V-V de la figure 3;
– la figure 6 est un schéma explicatif de l'application de l'invention à la commande d'un volet thermique ;
– la figure 7 est un schéma d'une variante de réalisation de la figure 1, à plus petite échelle ;
– la figure 8 est une vue en coupe de cette variante selon la ligne VIII-VIII ;

– et la figure 9 est un schéma d'une autre variante de réalisation.

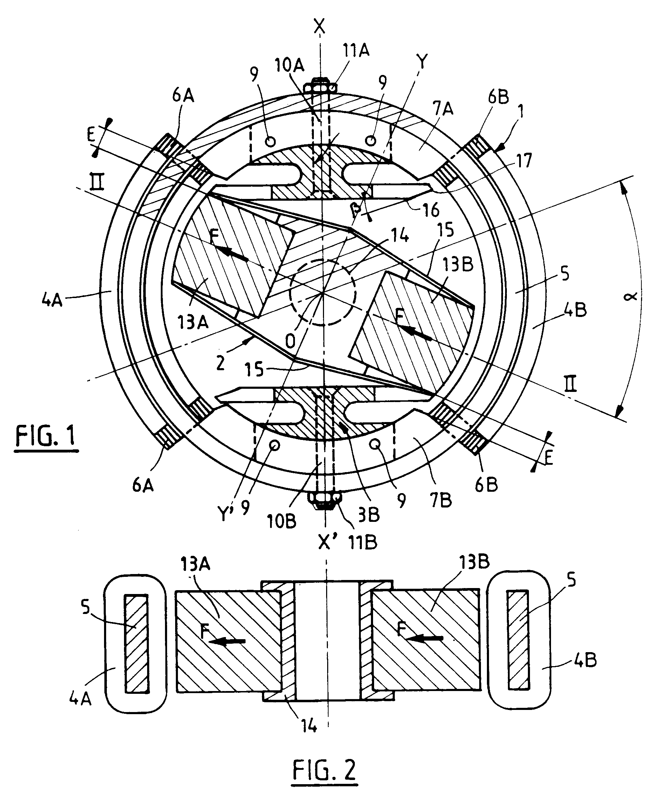

En se reportant aux figures 1 à 5 on voit que dans cette forme de réalisation de l'invention, le dispositif de butée à verrouillage magnétique est totalement intégré dans le moteur proprement dit et qu'il n'y a par conséquent pas d'augmentation d'encombrement due, tant aux butées qu'à des éléments de verrouillage.

D'un point de vue général, l'ensemble est constitué d'un stator désigné par la référence générale 1, d'un rotor désigné par la référence 2 et d'un double système de butée à verrouillage magnétique désigné par les références générales 3A-3B.

D'une façon plus particulière, le stator est constitué de deux bobines diamétralement opposées 4A-4B montées sur une couronne magnétique 5 sur laquelle elles sont maintenues au moyen de bagues d'extrémité 6A-6B. Entre les bobines 4A-4B et diamétralement opposées sont installées des plaques magnétiques de verrouillage 7A-7B rendues solidaires respectivement des butées 3A-3B.

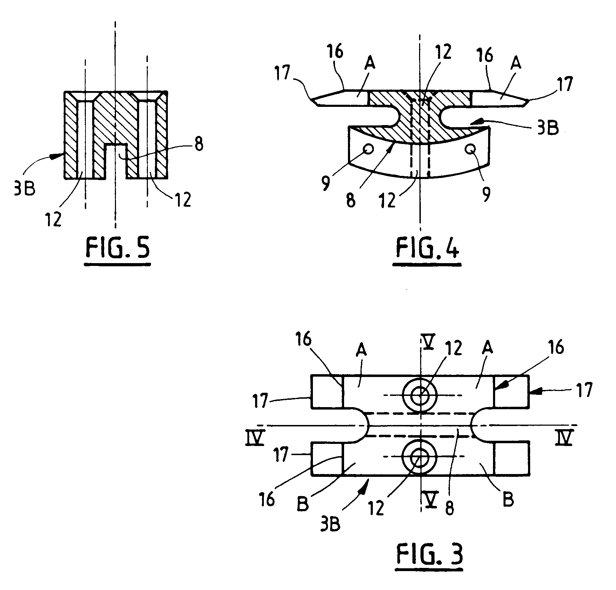

A cet effet, chacune des butées, comme par exemple la butée 3B représentée sur les figures 3, 4 et 5, comporte une fente longitudinale incurvée 8 dans laquelle vient se loger la plaque magnétique correspondante 7A-7B où elle est fixée au moyen de pions tels que 9.

Par ailleurs, la partie du corps de butée tournée vers l'intérieur du stator se sépare en deux poutres parallèles A et B permettant de laisser passer le flux magnétique de verrouillage, comme on le verra en détail plus loin.

Les deux ensembles butées 3A-3B et plaques de verrouillage 7A-7B sont montés, chacun, sur la couronne 5 du stator au moyen de vis 10A-10B et écrous 11A-11B, lesdites butées comportant des trous appropriés tels que 12.

Le rotor 2 est constitué de deux aimants 13A-13B aimantés dans le même sens F et accolés à un moyeu 14 en un matériau magnétique qui peut être évidé ou non en son centre. Sur les faces latérales du rotor sont collées des plaques 15 en matériau magnétique ou non qui ont pour but de protéger les aimants des chocs lors des mises en butée.

Il est à noter que les butées 3A-3B sont réalisées dans un matériau élastique tel que du "DELRIN" avec les extrémités des poutres latérales A et B taillées suivant un angle β (voir figure 1), ce qui permet, lors de la flexion des butées, de n'user que les sommets 16, de celles-ci sans affecter les extrémités 17 et par suite, d'assurer un très bon positionnement sur les butées.

On voit immédiatement que l'avantage de réaliser les butées 3A-3B en un matériau amagnétique réside en ce que, si d'aventure une butée se cassait, elle ne serait pas attirée par les aimants 13A-13B et ne produirait en conséquence aucune perturbation dans le fonctionnement.

Du point de vue fonctionnement, on voit immédiatement que les aimants 13A-13B génèrent un flux magnétique qui se referme de part et d'autre du rotor dans la couronne 5. Entre les aimants et la couronne, existe un entrefer dans lequel règne un champ magnétique à peu près homogène.

On a vu précédemment qu'en regard des aimants 13A-13B sont disposées des bobines 4A-4B qui sont branchées en série et qui, lorsqu'elles sont traversées par un courant, produisent un couple sur le rotor 2 suivant la loi de Laplace. Sous l'action de ce couple, le rotor 2 pivote, autour du centre O d'un angle α, ce qui correspond à la course entre les butées 3A-3B. On voit que lors de sa rotation le rotor 2 quitte l'une des butées pour arriver sur l'autre butée, en chacune de ses extrémités, le courant étant maintenu dans les bobines 4A-4B jusqu'à stabilisation du rotor sur les butées, en fin de course.

Le courant dans les bobines 4A-4B peut alors être coupé, le couple de verrouillage étant dès lors assuré par les plaques magnétiques 7A-7B qui ont pour effet de dévier une partie du flux magnétique par les entrefers E entre l'aimant 13A et l'extrémité de la plaque magnétique 7A, d'une part, et, entre l'aimant 13B et l'extrémité de la plaque magnétique 7B, d'autre part.

Le changement du sens du courant dans les bobines 4A-4B provoque le changement du sens de rotation du rotor 2 et, après stabilisation de ce dernier en fin de course et coupure du courant dans les bobines, un verrouillage est assuré, cette fois, par déviation d'une partie du flux magnétique par les entrefers E entre l'aimant 13A et l'extrémité de la plaque magnétique 7B, d'une part et, entre l'aimant 13B et l'extrémité de la plaque magnétique 7A, d'autre part. Il est à noter que comme on l'a exposé plus haut le passage du flux magnétique de verrouillage dans les entrefers E est favorisé en ce qu'il s'effectue entre les deux parties A et B des butées 3A-3B.

La commande du moteur se réduit à un simple signal en créneau tension/temps ou courant/temps.

Il résulte de ce qui précède que : le verrouillage ne consomme pas d'énergie; le couple de verrouillage est réglable en modifiant la valeur des entrefers E; le fonctionnement des butées et celui du verrouillage ne sont pas altérés par le vide ni la température.

D'autre part, on a vu précédemment l'avantage de réaliser les butées 3A-3B en un matériau amagnétique, en cas de rupture accidentelle de celles-ci.

Il est toutefois apparent que lesdites butées peuvent être réalisées en un matériau magnétique, ce qui permet de supprimer dans ce cas les plaques magnétiques de verrouillage 7A-7B.

On a vu dans l'exposé qui a été fait précédemment de la genèse de l'invention que la présente invention concernait un dispositif de butée à verrouillage magnétique qui, associé à un moteur couple, permettait, entre autres, de faire fonctionner un volet thermique dans des conditions optimales.

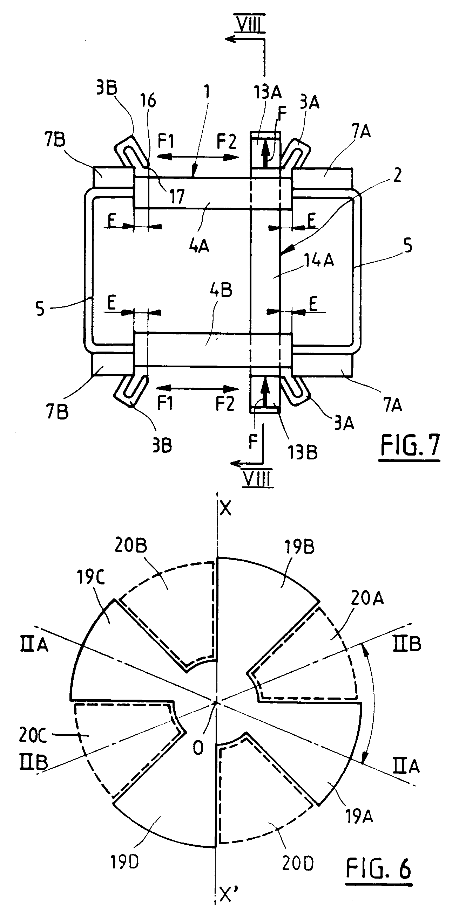

En se reportant à la figure 6 représentant le schéma général d'un volet thermique en croix de Malte à quatre pales 19A, 19B, 19C, 19D entre lesquelles sont répartis quatre radiateurs fixes 20A, 20B, 20C et 20D, et en comparant cette figure 6 avec la figure 1 représentant le moteur couple à courant continu sans balai et muni d'un dispositif de butée à verrouillage magnétique conforme à l'invention, on constate qu'il suffit de lier en rotation autour de centre géométrique O, la partie centrale de la croix de Malte avec le moyeu 14 du rotor 2 du moteur en prenant soin de caler l'axe longitudinal II-II du rotor 2 avec l'axe longitudinal IIA-IIA des pales opposées 19A-19C du volet pour faire fonctionner ce dernier dans des conditions optimales.

On voit en effet immédiatement que la rotation, dans un sens ou dans l'autre, du rotor 2 du moteur, se traduit par la rotation de O à 45° et de 45° à 0° du volet, pour passer de la position initiale IIA-IIA à la position finale IIB-IIB et vice versa, ce qui permet de masquer ou de démasquer les radiateurs fixes 20A, 20B, 20C et 20D et, par conséquent, de moduler leur rayonnement vers l'extérieur et ce dans des conditions optimales puisque le système permet en outre d'amortir les chocs au moment des fins d'ouverture ou de fermeture et de garantir cette position ouverte ou fermée sans consommation d'énergie.

Sur l'ensemble que l'on a décrit en référence aux figures 1 à 5, le système de butées et de verrouillage est redondant afin de réaliser au mieux une symétrie des efforts, étant bien entendu que l'on ne sortirait pas du cadre de l'invention en réalisant un système non symétrique.

C'est ainsi, en particulier, que l'une des butées 3A-3B peut être supprimée ou alors chacune de ces butées est réduite à sa moitié, soit droite, soit gauche par rapport à l'axe XX' de la figure 1, étant évident que dans cette dernière éventualité, le rotor 2 peut être réduit à sa moitié, soit droite, soit gauche, par rapport à l'axe YY' de ladite figure 1.

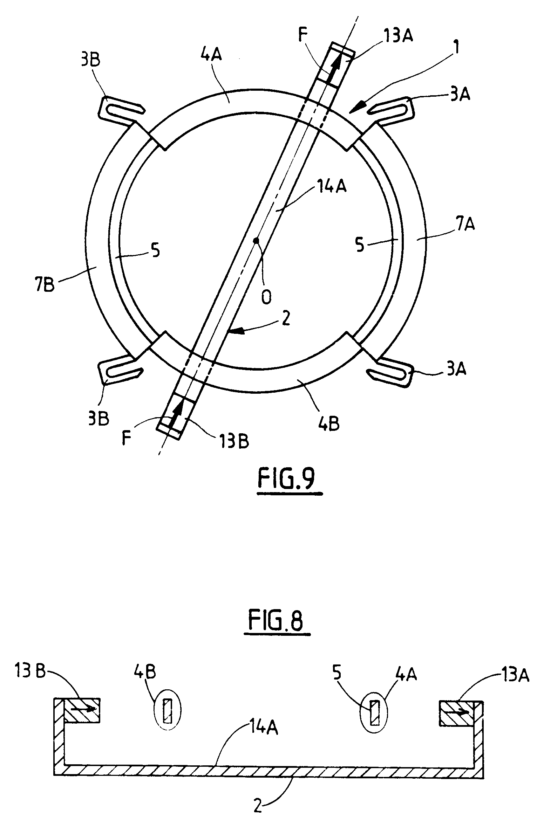

Suivant une variante de réalisation de l'invention représentée sur les figures 7 et 8, on peut obtenir un dispositif de butée à verrouillage magnétique analogue à celui que l'on vient de décrire en référence aux figures 1 à 5, mais appliqué cette fois à un moteur linéaire.

Il apparaît immédiatement que l'on passe du système de la figure 1 au système des figures 7 et 8, en donnant au rayon du stator de la première réalisation une valeur infinie dans la deuxième réalisation.

Pour ne pas surcharger inutilement la description on ne décrira pas de nouveau l'ensemble des éléments constitutifs du système, se contentant de reporter sur les figures 7 et 8 les mêmes références pour désigner les mêmes éléments, étant simplement à noter que les deux aimants du rotor 13A et 13B sont réunis entre eux, non plus par un moyeu, mais par une pièce de liaison 14A en un matériau magnétique.

Le fonctionnement reste analogue dans le cas du moteur linéaire, à la seule différence, qu'au lieu de tourner autour du centre géométrique O de l'ensemble, les aimants 13A et 13B se translatent dans le sens de la flèche F1 ou de la flèche F2 lorsque l'on met les bobines 4A et 4B sous tension et que le courant passe dans un sens ou dans l'autre. Lorsque les aimants 13A et 13B arrivent en butée sur les butées 3B et sont stabilisés, il suffit de couper le courant dans les bobines 4A et 4B, le couple de verrouillage étant assuré par les plaques magnétiques 7B en déviant une partie du flux magnétique par l'entrefer E.

Il est à noter que dans cette forme de réalisation, le sens d'aimantation F des aimants 13A et 13B, n'a pas de direction privilégiée par rapport aux plaques 7A,7B.

Il est apparent que les configurations des figures 1 et 7 ne sont pas les seules possibles.

On voit en effet qu'en plaçant le centre du rayon infini, dans le plan contenant la figure 7 au centre géométrique O de l'ensemble et en donnant à ce rayon une valeur finie, comme dans le cas de la figure 1, on obtient une troisième configuration, comme celle schématisée sur la figure 8, dans laquelle, cette fois-ci, les butées 3A,3B et les aimants 13A-13B se trouvent à l'extérieur de la couronne 5, des bobines 4A,4B et des plaques 7A,7B dans le plan de la figure 7.

Il y a lieu de noter que, comme dans les cas précédents, les aimants 13A et 13B doivent être reliés entre eux par une pièce de liaison en un matériau magnétique 14A qui pivote autour d'un axe passant par le centre géométrique O de l'ensemble.

Dans cette configuration le dispositif de butée à verrouillage magnétique, dont le fonctionnement reste sans changement, n'est plus totalement intégré dans le moteur proprement dit mais est situé à l'extérieur du stator ce qui, cette fois-ci, permet de libérer l'encombrement interne du stator.

Il est bien évident que l'on adoptera celles des configurations de l'invention qui s'adapte le mieux au problème concret qu'il y a lieu de mettre en oeuvre dans la pratique.

En d'autres termes, on choisira la configuration du dispositif de butée a verrouillage magnétique conforme à l'invention susceptible de s'intégrer au mieux au système requérant une précision de butée en position et le maintien en position sans dépense d'énergie.

**Revendications**

1. Moteur électrique comportant :
   – un élément statorique (5) en matériau magnétique,
   – un élément mobile (2) en matériau magnétique portant au moins un aimant permanent (13A, 13B) en présentant deux extrémités (13A, 13B) adaptées à longer des tronçons de l'élément statorique en définissant avec ces tronçons deux entrefers constants grâce auxquels le flux magnétique de l'aimant permanent se referme dans ledit élément statorique entre ces tronçons,
   – au moins une bobine (4A, 4B) enroulée autour d'au moins l'un de ces tronçons,
   – au moins une paire de butées (3A-A, 3A-B, 3B-A, 3B-B) délimitant, le long desdits tronçons de l'élément statorique, un débattement donné pour lesdites extrémités de l'élément mobile, entre deux configurations de butée, l'une de ces extrémités étant en toute position de l'élément mobile en regard de ladite bobine, chacune de ces butées étant munie d'une portion (7A, 7B) en matériau magnétique liée à l'élément statorique et déterminant, lorsque l'une de ces extrémités est en appui contre cette butée, un entrefer (E) au travers duquel une partie du flux magnétique de l'aimant passe dans ladite portion en matériau magnétique, l'élément mobile venant en l'une ou l'autre desdites configurations de butée en fonction du sens du courant continu appliqué à la bobine et y restant magnétiquement verrouillé grâce à ladite portion magnétique des butées.

2. Moteur selon la revendication 1, caractérisé en ce que les butées sont en un matériau élastique amagnétique et sont chacune distinctes de la portion magnétique interposée entre cette butée et l'élément statorique.

3. Moteur selon la revendication 1 ou la revendication 2, caractérisé en ce que ladite paire de butées (3A ; 3B) est portée par un même corps de butée, les configurations de butée correspondant soit à l'appui de l'une des extrémités contre l'une des butées, soit à l'appui de l'autre des extrémités contre l'autre des butées.

4. Moteur selon l'une quelconque des revendications 1 à 3, caractérisé en ce que ladite paire de butées est portée par deux corps de butée distincts et encadre avec ledit débattement l'une de ces extrémités de l'élément mobile.

5. Moteur selon l'une quelconque des revendications 1 à 4, caractérisé en ce que chacune des extrémités de l'élément mobile est formée par un aimant permanent et une bobine est enroulée sur chacun des deux tronçons statoriques.

6. Moteur selon l'une quelconque des revendications 1 à 5, caractérisé en ce que l'élément statorique (5) est une couronne portée par un stator (1) tandis que l'élément mobile (2) est un rotor mobile en rotation par rapport au stator.

7. Moteur selon la revendication 6, caractérisé en ce que le stator (1) comporte deux bobines alimentées en série, diamétralement opposées (4A,4B), entre lesquelles sont installées et diamétralement opposées deux plaques magnétiques de verrouillage (7A,7B) fixées sur deux butées doubles (3A,3B), elles-mêmes fixées et diamétralement opposées, sur la couronne (5) du stator (1), tandis que le rotor (2) est constitué de deux aimants (13A,13B) aimantés dans le même sens (F) et accollés à un moyeu (14) en matériau magnétique.

8. Moteur selon la revendication 7, caractérisé en ce que les faces latérales des aimants (13A,13B) étant protégées par des plaques de protection (15).

9. Moteur selon l'une quelconque des revendications 6 ou 8, caractérisé en ce que la partie de corps des butées (3A,3B) tournée vers le rotor se sépare en deux poutres parallèles (A et B), favorisant le passage du flux magnétique de verrouillage au travers de l'entrefer (E) et dont les extrémités sont taillées suivant un angle déterminé (β) afin d'assurer un très bon positionnement du rotor (2) sur les butées.

10. Moteur selon l'une quelconque des revendications 6 à 9, caractérisé en ce que les butées (3A,3B) et les aimants (13A,13B) du rotor (2) se trouvent disposés à l'extérieur de la couronne (5) et dans le même plan de symétrie de celle-ci, des bobines (4A,4B) et des plaques magnétiques de verrouillage (7A,7B), ce qui permet de libérer l'encombrement interne du stator.

11. Moteur selon l'une quelconque des revendications 1 à 5, caractérisé en ce que, les tronçons du stator (1) sont rectilignes parallèles tandis que les butées (3A,3B), les plaques magnétiques de verrouillage (7A,7B) et les aimants (13A,13B) de l'élément mobile (2) sont disposés dans un plan transversal à la couronne (5) et aux bobines (4A,4B) du stator (1), et l'élément mobile (2) se déplaçant par translation latérale (F1 - F2).

12. Moteur selon l'une quelconque des revendications 1 à 11, caractérisé en ce que les butées sont en matériau magnétique, constituent ainsi elle-mêmes les portions magnétiques dans lesquelles passe une partie du flux magnétique de l'aimant.

13. Volet thermique pour véhicule spatial muni de pales (19A, 19B, 19C, 19D) destinés à masquer ou démasquer des radiateurs thermiques (20A, 20B, 20C, 20D) monté sur un moteur selon l'une quelconque des revendications 1 à 11, ce volet étant lié à l'élément mobile, et ces radiations étant fixes par rapport à l'élément statorique.

**Patentansprüche**

1. Elektromotor, der folgendes umfaßt:
– ein Statorelement (5) aus magnetischem Material;
– ein bewegliches Element (2) aus magnetischem Material, das zumindest einen Permanentmagneten (13A, 13B) trägt und zwei Enden (13A, 13B) aufweist, die sich entlang von Abschnitten des Statorelements erstrecken und dabei mit diesen zwei konstante Luftspalte begrenzen, durch die sich der magnetische Fluß des Permanentmagneten wieder in dem Statorelement zwischen diesen Abschnitten schließt;
– zumindest eine Spule (4A, 4B), die um wenigstens einen der Abschnitte gewickelt ist, und
– zumindest ein Paar von Anschlägen (3A-A, 3A-B, 3B-A, 3B-B), die entlang der Abschnitte des Statorelements für die Enden des beweglichen Elements ein Spiel zwischen zwei Anschlaganordnungen begrenzen, wobei eines der Enden in jeder Stellung des beweglichen Elements der Spule gegenüberliegt, jeder dieser Anschläge mit einem aus magnetischem Material bestehenden Teil (7A, 7B) versehen ist, das mit dem Statorelement verbunden ist und, wenn eines der Enden auf diesem Anschlag aufliegt, einen Luftspalt (E) begrenzt, durch den ein Teil des magnetischen Flusses des Magneten in das erwähnte Teil aus magnetischem Material geht, und wobei das bewegliche Element, abhängig von der Richtung des an die Spule angelegten Gleichstroms, zu der einen oder anderen Anschlaganordnung bewegt und dort infolge des magnetischen Teils der Anschläge magnetisch verriegelt wird.

2. Motor nach Anspruch 1, **dadurch gekennzeichnet**, daß die Anschläge aus einem elastischen, nicht-magnetischen Material bestehen und jeder Anschlag von dem magnetischen Teil getrennt ist, das zwischen Anschlag und Statorelement liegt.

3. Motor nach Anspruch 1 oder 2, dadurch gekennzeichnet, daß das Anschlagpaar (3A, 3B) von demselben Anschlagkörper getragen wird, wobei die Anschlaganordnung derart ausgebildet ist, daß entweder das eine Ende gegen den einen Anschlag oder das andere Ende gegen den anderen Anschlag anliegt.

4. Motor nach einem der Ansprüche 1 bis 3, dadurch gekennzeichnet, daß das Anschlagpaar von zwei getrennten Anschlagkörpern getragen wird und mit dem Spiel eines der Enden des beweglichen Elements einschließt.

5. Motor nach einem der Ansprüche 1 bis 4, dadurch gekennzeichnet, daß jedes der Enden des beweglichen Elements durch einen Permanentmagneten gebildet wird und eine Spule um jeden der beiden Statorabschnitte gewickelt ist.

6. Motor nach einem der Ansprüche 1 bis 5, dadurch gekennzeichnet, daß das Statorelement (5) ein Kranz ist, der von einem Stator (1) getragen wird, während das bewegliche Element (2) ein gegenüber dem Stator drehbeweglicher Rotor ist.

7. Motor nach Anspruch 6, dadurch gekennzeichnet, daß der Stator (1) zwei Spulen beinhaltet, die in Serie gespeist werden, einander diametral gegenüberliegen (4A, 4B) und zwischen denen zwei magnetische Verriegelungsplatten (7A, 7B) eingesetzt sind, die einander diametral gegenüberliegen und an zwei doppelten Anschlägen (3A, 3B) befestigt sind, welche ihrerseits an dem Kranz (5) des Stators (1) befestigt sind und einander diametral gegenüberliegen, während der Rotor (2) aus zwei Magneten (13A, 13B) besteht, die im selben Sinn (F) magnetisiert und an einer Nabe (14) aus magnetischem Material befestigt sind.

8. Motor nach Anspruch 7, dadurch gekennzeichnet, daß die Seitenflächen der Magnete (13A, 13B) durch Schutzplatten (15) geschützt sind.

9. Motor nach einem der Ansprüche 6 oder 8, dadurch gekennzeichnet, daß sich der Teil des Anschlagkörpers (3A, 3B), der dem Rotor zugewandt ist, zur Begünstigung des Durchgangs des magnetischen Verriegelungsflusses durch den Luftspalt (E) in zwei parallele Träger (A und B) teilt, deren Enden unter einem festgelegten Winkel (β) zulaufen, um eine sehr gute Positionierung des Rotors (2) auf den Anschlägen zu gewährleisten.

10. Motor nach einem der Ansprüche 6 bis 9, dadurch gekennzeichnet, daß sich die Anschläge (3A, 3B) und die Magnete (13A, 13B) des Rotors (2) auf der Außenseite des Kranzes (5) befinden und die Spulen (4A, 4B) sowie die magnetischen Verriegelungsplatten (7A, 7B) auf derselben Symmetrieebene wie dieser liegen, wodurch der Innenraum des Stators freigehalten werden kann.

11. Motor nach einem der Ansprüche 1 bis 5, dadurch gekennzeichnet, daß die Abschnitte des Stators (1) geradlinig parallel sind, während die Anschläge (3A, 3B), die magnetischen Verriegelungsplatten (7A, 7B) und die Magnete (13A, 13B) des beweglichen Elements (2) in einer Ebene quer zum Kranz (5) und den Spulen (4A, 4B) des Stators (1) liegen, und das bewegliche Element (2) durch seitliche Verschiebung (F1-F2) verstellbar ist.

12. Motor nach einem der Ansprüche 1 bis 11, dadurch gekennzeichnet, daß die Anschläge aus magnetischem Material bestehen und somit selbst die magnetischen Teile darstellen, in denen ein Teil des Magnetflusses des Magneten fließt.

13. Wärmeklappe für ein Raumfahrzeug, die mit Flügeln (19A, 19B, 19C, 19D) zum Abdecken oder zur Freigabe von Wärmestrahlern (20A, 20B, 20C, 20D) ausgestattet ist, die auf einem Motor nach einem der Ansprüche 1 bis 11 befestigt sind, wobei diese Klappe an dem beweglichen Element befestigt ist und diese Strahlen in bezug auf das Statorelement unveränderlich sind.

**Claims**

1. Electric motor comprising:
– a magnetic material stator member (5),
– a magnetic material mobile member (2) carrying at least one permanent magnet (13A, 13B) and having two ends (13A, 13B) adapted to lie along sections of the stator member to define with these sections two constant airgaps by virtue of which the magnetic flux of the permanent magnet is closed within said stator member between these sections,
– at least one winding (4A, 4B) wound around at least one of these sections,
– at least one pair of abutment members (3A-A, 3A-B, 3B-A, 3B-B) delimiting along said sections of the stator member a particular range of movement for said ends of the mobile member between two abutment configurations, one of these ends facing said winding for any position of the mobile member, each of the abutment members being provided with a magnetic material portion (7A, 7B) linked to the stator member and defining, when one of. the ends is in contact with the abutment member, an airgap (E) through which some of the magnetic flux from the magnet passes into said magnetic material portion, the mobile member coming into one or the other of said abutment configurations according to the direction of the direct current applied to the winding and remaining magnetically locked there by virtue of said magnetic portion of the abutment members.

2. Motor according to claim 1 characterised in that the abutment members are made from a non-magnetic elastic material and each is separate from the magnetic portion disposed between the abutment member and the stator member.

3. Motor according to claim 1 or claim 2 characterised in that said pair of abutment members (3A; 3B) is carried by a common abutment member body, the abutment configurations corresponding either to bearing of one end against one of the abutment members or to bearing of the other end against the other of the abutment members.

4. Motor according to any one of claims 1 to 3 characterised in that said pair of abutment members is carried by two separate abutment member bodies and encloses, allowing said range of movement, one end of the mobile member.

5. Motor according to any one of claims 1 to 4 characterised in that each end of the mobile member is formed by a permanent magnet and a winding is wound on to each of the two stator sections.

6. Motor according to any one of claims 1 to 5 characterised in that the stator member (5) is a ring carried by a stator (1) and the mobile member (2) is a rotor rotatable relative to the stator.

7. Rotor according to claim 6 characterised in that the stator (1) comprises two diametrically opposed windings (4A, 4B) energised in series between which are disposed two diametrically opposed magnetic locking plates (7A, 7B) fixed to two diametrically opposed and fixed double abutment members (3A, 3B) on the ring (5) of the stator (1) and the rotor (2) comprises two magnets (13A, 13B) magnetised in the same direction (F) and attached to a magnetic material hub (14).

8. Motor according to claim 7 characterised in that the lateral surfaces of the magnets (13A, 13B) are protected by protective plates (15).

9. Motor according to either of claims 6 or 8 characterised in that the part of the body of the abutment members (3A, 3B) facing towards the rotor is divided into two parallel beams (A and B) favouring passage of the locking magnetic flux through the airgap (E) and the ends of which are cut at a predetermined angle ($\beta$) to ensure excellent positioning of the rotor (2) on the abutment members.

10. Motor according to any one of claims 6 to 9 characterised in that the abutment members (3A, 3B) and the magnets (13A, 13B) of the rotor (2) are disposed outside of the ring (5), and in the same plane of symmetry as the latter, the windings (4A, 4B) and the magnetic locking plates (7A, 7B), which makes it possible to free the internal space of the stator.

11. Motor according to any one of claims 1 to 5 characterised in that the sections of the stator (1) are parallel and rectilinear and the abutment members (3A, 3B), the magnetic locking plates (7A, 7B) and the magnets (13A, 13B) of the mobile member (2) are disposed in a plane transverse to the ring (5) and to the windings (4A, 4B) of the stator (1), the mobile member (2) moving in lateral translation (F1 - F2).

12. Motor according to any one of claims 1 to 11 characterised in that the abutment members are made from a magnetic material and thereby themselves constitute the magnetic portions into which passes some of the magnetic flux from the magnet.

13. Heat shield for space vehicles provided with blades (19A, 19B, 19C, 19D) adapted to cover or uncover heat exchangers (20A, 20B, 20C, 20D) mounted on a motor according to any one of claims 1 to 11, the shield being linked to the mobile member and the heat exchangers being fixed relative to the stator member.

FIG. 1

FIG. 2

FIG. 5

FIG. 4

FIG. 3

FIG. 7

FIG. 6

FIG.9

FIG.8